# EUROPEAN PATENT SPECIFICATION

(11) **EP 1 598 176 B1**
(45) Date of publication and mention of the grant of the patent: **15.07.2015**
(21) Application number: 03777234.0
(22) Date of filing: 04.12.2003
(51) Int. Cl.: B32B 7/02, B29C 65/36, B65B 51/10, B65B 51/22, B65D 65/40

(54) **LAMINATE MATERIAL, LAMINATE MATERIAL MANUFACTURING METHOD, LAMINATE MATERIAL HEAT-SEALING METHOD, AND PACKAGE CONTAINER**
LAMINATMATERIAL, HERSTELLUNGSVERFAHREN FÜR LAMINATMATERIAL, HEISSSIEGELVERFAHREN FÜR LAMINATMATERIAL UND VERPACKUNGSBEHÄLTER
LAMELLE, PROCEDE DE FABRICATION DE LAMELLE, PROCEDE DE THERMOSCELLAGE DE LAMELLE, ET RECIPIENT D'EMBALLAGE

(30) Priority: 28.02.2003 JP 2003053806
(43) Date of publication of application: 23.11.2005
(73) Proprietor: Tetra Laval Holdings & Finance S.A., 1009 Pully (CH)
(72) Inventor: KIKUCHI, Hideyo, NIHON TETRA PAK K.K., Chiyoda-ku, Tokyo 102-8544 (JP)
(74) Representative: Müller Schupfner & Partner Patent- und Rechtsanwaltspartnerschaft mbB
(86) International application number: PCT/JP2003/015515
(87) International publication number: WO 2004/076169

(56) References cited:
- EP-A1- 0 628 493
- EP-A1- 1 234 771
- WO-A-97/02139
- JP-A- 2 147 326
- JP-A- 2 180 105
- JP-A- 4 019 139
- JP-A- 11 029 110
- US-A- 4 264 668
- DATABASE WPI Week 200157 Derwent Publications Ltd., London, GB; AN 2001-517039 XP002422288 -& JP 2001 130629 A (TOPPAN PRINTING CO LTD) 15 May 2001 (2001-05-15)
- DATABASE WPI Week 200159 Derwent Publications Ltd., London, GB; AN 2001-532688 XP002422287 -& JP 2001 192018 A (DAINIPPON PRINTING CO LTD) 17 July 2001 (2001-07-17)

## Description

### Technical field

The present invention relates to a laminate material, a laminate material manufacturing method, a laminate material heat-sealing method, and a package container.

### Background art

A web-shaped laminate material for a package container which comprises a support layer and a thermoplastic innermost layer and has a carbon black conductive layer provided in a region to be heat-sealed by high-frequency induction heating for forming the container between the support layer and the thermoplastic innermost layer, is already known, for example, it is described in Japanese Examined Patent Publication (Kokoku) No. 1988-222. A laminate material shown in Fig. 1 comprises a support layer, a thermoplastic innermost layer and a carbon black conductive layer as an interlayer therebetween. A packaging machine which is equipped with an attaching device to attach an aluminum foil tape for high-frequency induction heating to a region to be heat-sealed in a web-shaped laminate material and heats the aluminum foil tape by high-frequency induction with a high-frequency coil in a heater, and is described for instance in Japanese Patent No. 2694286.

Packaging paper containers for fluid foods are classified into either aseptic packaging systems which is storable at normal temperature or chilled packaging systems distributed under chilled conditions like milk containers. In general, respective packaging laminate materials are separatedly manufactured in an aseptic packaging system or a chilled packaging system, and are filled and packed with fluid foods by the separate packaging and filling machines and by separate sealing methods. However, even if a an aseptic packaging and a chilled packaging are installed, a part of the counter system is diverted, thereby enabling efficient operation of the whole packaging systems and, furthermore, this contributes to the saving of the energy and materials and the reduction of the manufactring cost.

EP 1 234 771 A1 discloses a high frequency heat-sealing apparatus for sealing a packing material being made by a laminate including a thermoplastic resin layer and a conductive material layer to be heated by high-frequency heating, wherein the conductive material layer is formed of an aluminium foil.

WO 97/02139 relates to a packaging laminate for the manufacturing of packaging containers as well as a method for the manufacturing of a dimensional stable and impermeable packaging container comprising a thermoformable base layer, a barrier layer and laminate layer adjacent the barrier layer and directed towards the inside of the container contemplated.

JP 2001 192018 and JP 2001 130629 relate to a packaging material having a multilayer structure consisting of a base material, a barrier layer and a heat seal resin layer.

EP 0 628 493 A1 discloses an inner sealing material of a lid comprising a membrane layer having at least metal layer and a reseal layer having an elastic sheet layer. The membrane layer comprises a release layer which is overlaid with an adhesive layer, whereas the reseal layer comprises a thermoplastic layer. The inner sealing material can be subjected to high-frequency.

It is the object of the present invention to provide a laminated material for packaging containers and a method of preparing a laminate material for package containers, which can be used for aseptic packaging and chilled packaging and by means of which energy and material can be saved, so that the production costs can be reduced.

This object is fulfilled by a laminated material for package containers having the features disclosed in claim 1, by a method of preparing a laminate material for package containers having the features disclosed in claim 7 and by a method of preparing a package container from the inventive laminate material having the features disclosed in claim 8. Preferred embodiments are subject of the depend claims.

The laminate material and the package container of the present invention solving the problems comprises a web-shaped laminate material for a package container comprising a support layer and a thermoplastic innermost layer which has a conductive layer provided in a region to be heat-sealed by high-frequency induction heating for producing the container between the support layer and the thermoplastic innermost layer so that the heat generated by the induction heating is conducted to the innermost layer, wherein the conductive layer is a metal vapor deposition layer made of a metallic conductive material provided on a base film of a vapor deposition film between the support layer and the thermoplastic innermost layer. Consequently, even if an aseptic packaging system and a chilled packaging system are installed, a part of the counter system is diverted, thereby enabling efficient operation of the whole packaging systems, and this further contributes to the resuction of the energy, materials and manufacturing cost.

The invention of the laminate material of the present invention is characterized in that the web-shaped laminate material for a package container comprising at least a support layer and a thermoplastic innermost layer, has a conductive layer provided over the substantially entire surface of the laminate material between the support layer and the thermoplastic innermost layer so that the heat generated by the induction heating is conducted to the innermost layer, wherein the conductive layer is a metal vapor deposition layer made of a metallic conductive material provided on a base film of a vapor deposition film between the support layer and the thermoplastic innermost layer.

The above-described conductive layer is a metal vapor deposition layer made of a metallic conductive material provided outside of the base film of the vapor deposition film between the support layer and the thermoplastic innermost layer.

The invention of method for manufacturing the laminate material is characterized in that the method for manufacturing a web-shaped laminate material for a package container comprising at least a support layer and a thermoplastic innermost layer, comprises: preparing a plurality of rolled materials of the support layer; sequentially drawing a web-shaped support layer from the rolled materials; providing a vapor deposition film comprising a base film and a metal vapor deposition layer of a metallic conductive material provided inside or outside of the base film, inside the support layer over the substantially entire surface of the laminate material printing a design for the container indirectly or directly outside of the lengthy web-shaped support layer; simultaneously or sequentially forming same or different types of, one or a plurality of thermoplastic layers, outside and inside of the printed web-shaped support layer; and jointing the front end of the web-shaped support layer in the upstream with the back end of the web-shaped support layer in the downstream to form a more lengthy web-shaped support layer.

The invention of the heat-sealing method of the laminate material is characterized in that the method of heat-sealing a laminate material for a package container comprised of at least a support layer and a thermoplastic innermost layer, having a conductive layer provided in a region to be heat-sealed by high-frequency induction heating for producing the container between the support layer and the thermoplastic innermost layer so that the heat generated by the induction heating is conducted to the innermost layer, comprises: preparing a web-shaped laminate material wherein the conductive layer is a metal vapor deposition layer made of a metallic conductive material provided on a base film of a vapor deposition film between the support layer and the thermoplastic innermost layer; shaping the web-shaped laminate material in a tubular shape to longitudinally seal it in the longitudinal direction; filling a fluid food into the tube of the laminate material; forming a heat-seal region across the filled tube by high-frequency induction heating at prescribed intervals to transversely seal it in the transverse direction; and cutting the center of the sealed region to form individual containers.

Preferably the package container made of the laminate material comprising at least a support layer and a thermoplastic innermost layer, has a conductive layer that is a metal vapor deposition layer made of a metallic conductive material provided on a base film of a vapor deposition film between the support layer and the thermoplastic innermost layer over the substantially entire surface of the laminate material wherein the innermost layer is melted or softened by the heat generated by the induction heating to form a seal region with the opposing softened or melted innermost layer.

This invention with the above constitutions has the following operation.

The web-shaped laminate material for a package container of the present invention has lengthy band shape (web shape) capable of forming a number of containers, thereby enabling continuous and rapid filling production of the package container.

In the present invention, the support layer gives physical and mechanical strength to the package container and the laminate material, and maintains and supports their shapes, configurations or the like. The thermoplastic innermost layer, which is also the innermost layer of the container wall of the container, directly contacts with a fluid food and prevents the fluid from permeating into the support layer of the container and moistening the same. Additionally, the innermost layer is melted or softened by heating to form a seal region for heat seal.

The conductive layer is a metal vapor deposition layer made of a metallic conductive material provided on the a base film of a vapor deposition film between the support layer and the thermoplastic innermost layer. Since the conductive layer has electric conductivity, application of high-frequency current to an external coil generates induction current by high-frequency induction in the conductive layer, and the heat resulting from the resistor melts the adjacent innermost plastic (thermoplastic material/resin) to seal. That is, in this invention, the conductive layer is inductively heated by high-frequency induction heating when forming the container, the generated heat is conducted to the innermost layer, and the thermoplastic innermost layer is heated to be melted or softened, and in the heated region, a heat seal region is made.

In an embodiment for which no protection is sought, the conductive layer is a metal vapor deposition layer made of a metallic conductive material provided inside of a base film of a vapor deposition film between the support layer and the thermoplastic innermost layer. In the embodiment, a vapor deposition tape can be used, which is obtained by vacuum-depositing a metal such as a metallic aluminum or an aluminum alloy, to outside of the base film such as a polyethylene or a polyester. A way of metal deposition and thickness of the vapor deposition layer can be determined by various methods, e.g. a vacuum vapor deposition method, a spattering method, a plasma treatment method or the like. In the embodiment, the layer constitution of the web-shaped laminate material for a package container consists of, starting from the outside to the inside, the support layer, the vapor deposition film (the base film, the metal vapor deposition layer), and the thermoplastic innermost layer. In the embodiment, the metal vapor deposition layer is provided inside. The advantage of the embodiment is that the vapor deposition film can be provided not only in the region to be heat-sealed by high-frequency induction heating for producing the container but also over the substantially entire surface of the laminate material. Consequently, the conductive layer and the barrier layer can be simultaneously formed by laminating a vapor deposition film instead of the conventional aluminum foil laminate, in the manufacturing processes of the laminate material.

According to the invention, the conductive layer is a metal vapor deposition layer made of a metallic conductive material provided outside of a base film of a vapor deposition film between the support layer and the thermoplastic innermost layer. In the embodiment, the layer constitution of the web-shaped laminate material for a package container consists of, starting from the outside to the inside, the support layer, the vapor deposition film (the metal vapor deposition layer, the base film), and the thermoplastic innermost layer. In the embodiment, the metal vapor deposition layer is provided outside of the vapor deposition film. The advantage of the embodiment is that the vapor deposition film can be provided not only in the region to be heat-sealed by high-frequency induction heating for producing the container but also over the substantially entire surface of the laminate material, as well as the embodiment mentioned above. Consequently, the conductive layer and the barrier layer can be simultaneously formed by laminating a vapor deposition film in manufacturing the laminate material.

Further, a white masking agent is added to the base film, masking the metallic color of the metal vapor deposition layer.

For the preferred embodiment of the invention, the web-shaped laminate material manufacturing method comprises: preparing a plurality of rolled materials of the support layer; sequentially drawing the web-shaped support layer from the rolled material; laminating a vapor deposition film comprising a base film and a metal vapor deposition layer made of a metallic conductive material provided outside of the base film, inside the support layer over the substantially entire surface of the laminated material printing a design for the container indirectly or directly outside of the lengthy web-shaped support layer; simultaneously or sequentially forming same or different types of, one or a plurality of thermoplastic layers, outside and inside of the printed web-shaped support layer; and jointing the front end of the web-shaped support layer in the upstream with the back end of the web-shaped support layer in the downstream to form a more lengthy web-shaped support layer. As mentioned above, the advantage of the embodiment is that the vapor deposition film can be provided not only in the region to be heat-sealed by high-frequency induction heating for forminng the container but also over the substantially entire surface of the laminate material, and the conductive layer and the barrier layer can be simultaneously formed by laminating the vapor deposition film instead of the conventional aluminum foil laminate in the manufacturing processes of the laminate material.

In the laminate material heat-sealing method of this invention, the above laminate material of the invention i.e. the web-shaped laminate material comprising a support layer and a thermoplastic innermost layer is prepared, which has a conductive layer provided over the substantially entire surface of the laminate material between the support layer and the thermoplastic innermost layer so that the heat generated by the induction heating is conducted to the innermost layer, wherein the conductive layer is a metal vapor deposition layer made of a metallic conductive material provided on a base film of a vapor deposition film between the support layer and the thermoplastic innermost layer. The web-shaped laminate material is usually stored and transported in the form of a roll.

For instance, the rolled web-shaped laminate material is filled into the packaging machine, drawn from the roll and transported into the packaging machine. The web-shaped laminate material being transported is shaped into a tubular shape while lowering, and longitudinally sealed in the longitudinal direction to provide a liquid tight state without leakage. In the case of sealing longitudinally by high-frequency induction heating, high-frequency induction heating forms the heat seal region.

The fluid food is filled into the laminate material tube. The heat-seal region is formed in the transverse direction of the filled tube by high-frequency induction heating, preferably below the surface of the fluid at prescribed intervals to be sealed transversely. Subsequently, the center of the seal region is cut with a cutter knife or the like to form individual containers, and when needed, folded along crease lines to shape it in the final form.

### Brief description of the drawings

Fig. 1 is a section view illustrating a part of a web-shaped laminate material of an embodiment for which no protection is sought;
Fig. 2 is a plan view illustrating a part of the web-shaped laminate material of an embodiment of the invention;
Fig. 3 is a plan view illustrating the joint of the laminate material in one embodiment of the invention;
Fig. 4 is a schematic drawing illustrating the packaging machine used for the invention;
Fig. 5 is a schematic drawing illustrating the crosswise seal device in the packaging machine used for the invention.

### Best Mode for Carrying Out the Invention

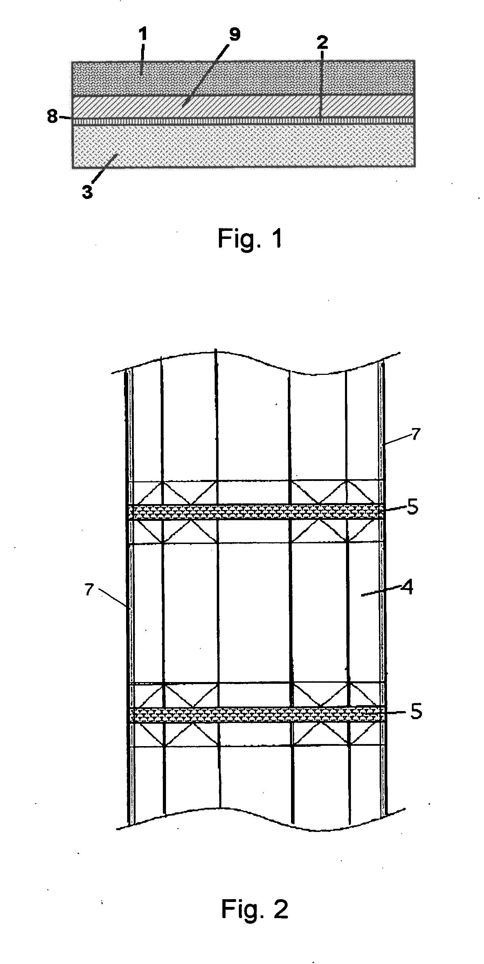

Hereinafter, embodiments of the present invention will be described using Fig. 1 to Fig. 5.

### (Embodiment 1)

Fig. 1 is a section view illustrating a part of the web-shaped laminate material of one embodiment of the invention. In Fig. 1, the laminate material has: a support layer (1) made of a paper, a paper board, a plastic or composite material thereof; a thermoplastic innermost layer (3) such as a low-density polyethylene or a linear low-density polyethylene; a conductive layer (2) provided over the substantially entire surface of the laminate material between the support layer (1) and the thermoplastic innermost layer (3) so that the heat generated by the induction heating is conducted to the innermost layer (3). The conductive layer is the metal vapor deposition layer (2) made of the metallic conductive material provided outside of the base film (9) of the vapor deposition film (8) between the support layer and the thermoplastic innermost layer.

Fig. 2 is a plan view illustrating a part of the web-shaped laminate material of one embodiment of the invention. In Fig. 2, a band-shaped laminate material (4) is a laminate material comprising a support layer made of a paper, a plastic or composite material thereof, and a thermoplastic layer such as a low-density polyethylene. A number of package containers can be obtained from the laminate material. A portion between two seal regions (5) to be transversely sealed in the transverse direction corresponds to one package container. The conductive layer is provided in the region (5) to be heat-sealed by high-frequency induction heating between the support layer and the thermoplastic innermost layer so that the heat generated by the induction heating is conducted to the innermost layer. In the case of longitudinal sealing by high-frequency induction heating, the conductive layer is also laiminated to both ends (7) in the web-shaped laminate material to form the heat seal region by high-frequency induction heating. The conductive layer is provided to the region (5) shown in Fig. 2 and its vicinity, and in the case of longitudinal sealing by high-frequency induction heating, to the both ends (7) and (7).

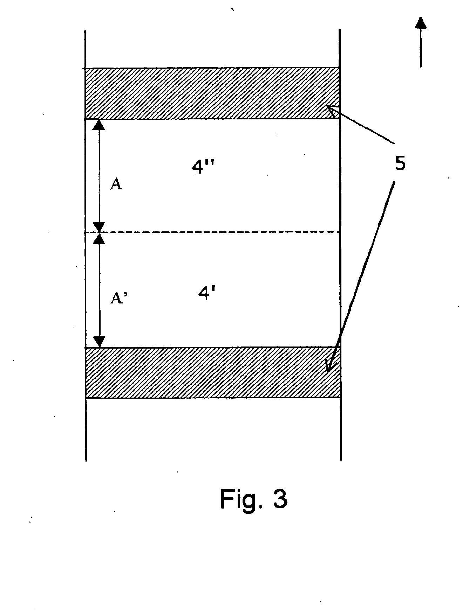

Fig. 3 is a plan view illustrating the state of jointing the final end of the laminate material (4") from the first roll with the front end of the laminate material (4') from the second roll. The seal region is accurately cut at the midle between the seal regions (5) of the laminate material (4") and the seal regions (5) of the laminate material (4'). As shown in Fig. 3, the final end of the laminate material web (4") in the downstream of printing processes and the front end of the laminate material web (4') in the upstream of printing processes are cut so that a distance A and a distance A' are equal in length, and the both cut surfaces of them are jointed in a temporarily stationary state. The width of the conductive layer may be taken more larger than a necessary width for acquiring a sealing property, to provide a margin capable of absorbing expansion and contraction of paper. The jointing can be accurately processed in a fast-working printer using an automatic joining device and conducted by a large-scale flexographic press or photogravure printing machine at the mass production level.

As mentioned above, the front end of the web-shaped support layer in the upstream and the back end of the web-shaped support layer in the downstream are jointed to form a more lengthy web-shaped support layer. The obtained web can be stored in the form of a roll, and can be also continuously fed in the downstream processes without storage.

The web is indirectly or directly printed with design for the container outside of the web-shaped support layer in printing processes, wherein "indirectly or directly" means that a plastic laminate layer, a film layer, a adhesive layer, an anchor coat layer or the like may be also provided between the print layer for pictures or designs and the surface of the support layer. The same or different types of, one or a plurality of thermoplastic layers are simultaneously or sequentially formed in the outside or inside of the printed web-shaped support layer, giving the single or multiple, outermost and innermost layers. In the midway process when needed, lines for facilitating puncture for a straw or formation of the container (fold lines and crease lines) are provided to the laminate material.

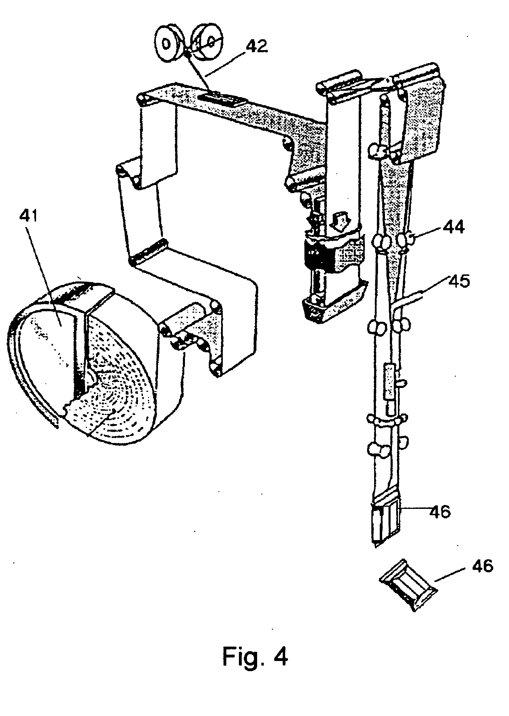

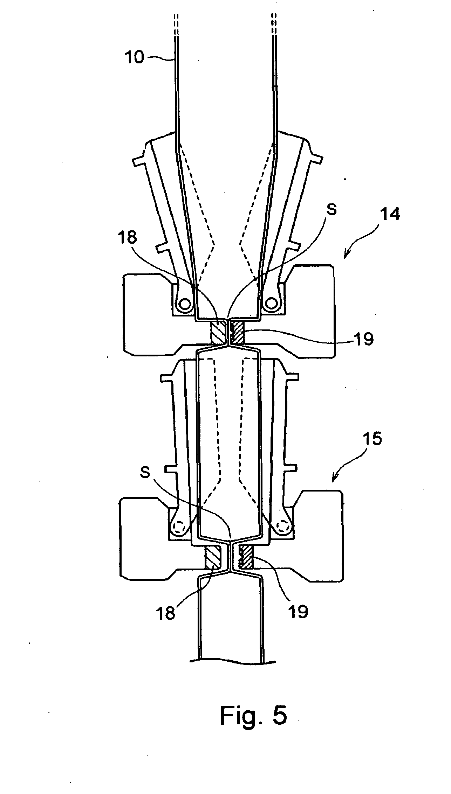

The laminate material heat-sealing method of one embodiment of the invention will be described with reference to Fig. 4 and Fig. 5.

Fig. 4 is a schematic drawing illustrating the packaging and filling machine used for the invention. The laminate material of the invention, that is, a web-shaped laminate material comprising a support layer, a vapor deposition film (a metal vapor deposition layer, a base film), and a thermoplastic innermost layer, is prepared. A rolled web-shaped laminate material (41) is filled into the packaging and filling machine, drawn from the roll (41), and transported into the filling machine. The web-shaped laminate material being transported, is adhered with a strip tape for longitudinal sealing by an applicator (42), and then shaped into a tubular shape while lowering by roller (44), and sealed in the longitudinal direction to provide a liquid tight state with no liquid leakage. When the strip tape for longitudinal sealing is jointed to one end of the laminate material by high-frequency induction heating, the conductive layer is also provided to the end (7). Additionally, in the case of longitudinal sealing by high-frequency induction heating, the conductive layer is provided to the both ends (7) and (7) of the laminate material web to form the heat seal region by high-frequency induction heating. The fluid food is supplied into the laminate material tube from a filling pipe (45). The heat-seal region is formed by high-frequency induction heating in the transverse direction of the filled tube, below the surface of the fluid at prescribed intervals to seal it transversely with a transverse sealing device (shown in Fig. 5). Subsequently, the center of each seal region mentioned above is cut with a cutter knife or the like to form individual containers (46), and when needed, folded along crease lines to shape it in the final form.

Fig. 5 is a schematic drawing illustrating the transverse sealing device in the filling machine.

As shown in Fig. 5, two transverse sealing devices (14) and (15) moving up and down, press the filled laminate material tube (10) in the transverse direction by inductors for the high-frequency induction heating (19) and counter jaws (18), and heat and cool it, then the heat-seal region (S) is fomed by high-frequency induction heating at prescribed intervals, to seal it transversely. Subsequently, the center of the seal region (S) is cut with a cutter knife or the like (not shown) to form individual containers.

In addition to the shape of the containers of the above mentioned embodiments, package containers in the invention include a brick-shaped container (parallelepipedon), a hexagonal cylinder-shaped container, an octagonal cylinder-shaped container, a tetrahedron-shaped container, a roof-shaped container and the like.

Thus, according to the present invention, the following favorable effects can be obtained.

Even if an aseptic packaging system and a chilled packaging system are installed, a part of the counter system can be diverted, thereby enabling efficient operation of the whole packaging systems, and the energy, materials and manufacturing cost can be therefore reduced.

The present invention enables seal/joint with the novel sealing method. The joint can be accurately processed in a fast-working printer using an automatic joining device and conducted by a large-scale flexographic press or photogravure printing machine at the mass production level. In the method of the present invention, the quick and definite sealing method can be applied to an inexpensive package material without any metallic foil layers.

### Industrial applicability

The laminate material, the laminate material manufacturing method, the laminate material heat-sealing method, and the package container in the present invention are utilized for package containers containing fluid foods like milk or soft drink etc.

## Claims

1. Web-shaped laminate material for package containers (46) comprising at least a support layer (1),
a thermoplastic innermost layer (3)
and a conductive layer (2),
wherein the conductive layer (2) is provided between the support layer (1) and the thermoplastic innermost layer (3),
wherein the conductive layer (2) is a metal vapor deposition layer made of a metallic conductive material provided on a base film (9) of a vapor deposition film (8) between the support layer (1) and the thermoplastic innermost layer (3), **characterized in that** the electrically conductive layer (2) is provided outside of the base film (9) between the support layer (1) and the base film (9), and the conductive layer (2) is provided over the substantially entire surface of the laminate material.

2. Laminate material as claimed in claim 1, **characterized in that** the base film (9) is formed as a barrier layer.

3. Laminate material as claimed in one of the proceeding claims, **characterized in that** said thermoplastic innermost layer (3) is made of low-density polyethylene or linear low-density polyethylene.

4. Method of preparing a laminate material for package containers, **characterized by** the following method steps:
a) preparing a plurality of rolled materials of a support layer (1);
b) sequentially drawing the web-shaped support layer (1) from the rolled materials;
c) providing a vapor deposition film (8) comprising a base film (9) and a metal vapor deposition layer made of a metallic electrically conductive material provided outside of the base film (9) between the support layer (1) and the base film (9), and forming a conductive layer (2) inside the support layer (1) over the substantially entire surface of the laminate material;
d) printing a design for the container indirectly or directly outside of the lengthy web-shaped support layer (1) and
e) simultaneously or sequentially forming same or different types of, one or a plurality of thermoplastic layers, outside and inside of the printed web-shaped support layer (1).

5. Method of preparing a package container from the laminate material according to one or more of claims 1-3, **characterized by** the following method steps:
a) preparing a web-shaped laminate material (4) wherein said conductive layer (2) is a metal vapor deposition layer made of a metallic electrically conductive material provided on a base film (9) of a vapor deposition film (8) between the support layer (1) and the thermoplastic innermost layer (3);
b) shaping the web-shaped laminate material into a tubular shape to longitudinally seal the same in the longitudinal direction;
c) filling a fluid food into the tube of the laminate material;
d) forming a heat-seal region (5) in the traverse direction of the filled tube by high-frequency induction heating at prescribed intervals to seal the same transversely;
e) cutting the center of the seal region (5) to form individual containers.

6. Method as claimed in claim 5, **characterized in that** a longitudinal seal (7) is formed by high-frequency induction heating.

7. Method as claimed in claims 5 or 6, **characterized in that** at least the thermoplastic innermost layer (3) is melted or softened by the heat generated by the induction heating to form a seal region (5, 7) with the softened or melted counter innermost layer (3).

## Patentansprüche

1. Bahnförmiges Laminatmaterial für Verpackungsbehälter (46), umfassend wenigstens eine Trägerschicht (1),
eine thermoplastische innerste Schicht (3),
und eine leitfähige Schicht (2),
wobei die leitfähige Schicht (2) zwischen der Trägerschicht (1) und der thermoplastischen innersten Schicht (3) angeordnet ist,
wobei die leitfähige Schicht (2) eine Metalldampfabscheidungsschicht ist, die aus einem metallischen leitfähigen Material besteht, das auf einem Basisfilm (9) eines Dampfabscheidungsfilms (8) zwischen der Trägerschicht (1) und der thermoplastischen innersten Schicht (3) angeordnet ist,
**dadurch gekennzeichnet, dass** die elektrisch leitfähige Schicht (2) außerhalb des Basisfilms (9) zwischen der Trägerschicht (1) und dem Basisfilm (9) angeordnet ist und die leitfähige Schicht (2) über im Wesentlichen der gesamten Oberfläche des Laminatmaterials bereitgestellt ist.

2. Laminatmaterial gemäß Anspruch 1, **dadurch gekennzeichnet, dass** der Basisfilm (9) als Barriereschicht gebildet ist.

3. Laminatmaterial gemäß einem der vorstehenden Ansprüche, **dadurch gekennzeichnet, dass** die thermoplastische innerste Schicht (3) aus Polyethylen mit niedriger Dichte oder linearem Polyethylen mit niedriger Dichte besteht.

4. Verfahren zum Herstellen eines Laminatmaterials für Verpackungsbehälter, **gekennzeichnet durch** folgende Verfahrensschritte:
a) Herstellen einer Vielzahl von gewalzten Materialien einer Trägerschicht (1);
b) sequenzielles Ziehen der bahnförmigen Trägerschicht (1) aus den gewalzten Materialien;
c) Bereitstellen eines Dampfabscheidungsfilms (8), umfassend einen Basisfilm (9) und eine Metalldampfabscheidungsschicht, die aus einem elektrisch leitfähigen Material besteht, außerhalb des Basisfilms (9) zwischen der Trägerschicht (1) und dem Basisfilm (9) angeordnet ist und eine leitfähige Schicht (2) innerhalb der Trägerschicht (1) über im Wesentlichen die gesamte Oberfläche des Laminatmaterials bildet;
d) Drucken eines Designs für den Behälter indirekt oder direkt außerhalb der langgestreckten, bahnförmigen Trägerschicht (1) und
e) gleichzeitig oder sequenziell Bilden von gleichen oder unterschiedlichen Typen von einer oder einer Vielzahl von thermoplastischen Schichten außerhalb und innerhalb der bedruckten bahnförmigen Trägerschicht (1).

5. Verfahren zum Herstellen eines Verpackungsbehälters aus dem Laminatmaterial gemäß einem oder mehreren der Ansprüche 1-3, **gekennzeichnet durch** folgende Verfahrensschritte:
a) Herstellen eines bahnförmigen Laminatmaterials (4), wobei die leitfähige Schicht (2) eine Metalldampfabscheidungsschicht ist, die aus einem metallischen elektrisch leitfähigen Material besteht, das auf einem Basisfilm (9) eines Dampfabscheidungsfilms (8) zwischen der Trägerschicht (1) und der thermoplastischen innersten Schicht (3) angeordnet ist;
b) Formen des bahnförmigen Laminatmaterials zu einer schlauchförmigen Form, um diese in Längsrichtung längszusiegeln;
c) Einfüllen eines flüssigen Lebensmittels in den Schlauch aus dem Laminatmaterial;
d) Bilden eines Heißsiegelbereichs (5) in der Querrichtung des gefüllten Schlauchs **durch** Hochfrequenz-Induktionsheizen in festgelegten Intervallen, um ihn querzusiegeln;
e) Schneiden in der Mitte des Siegelbereichs (5), um einzelne Behälter zu bilden.

6. Verfahren gemäß Anspruch 5, **dadurch gekennzeichnet, dass** ein Längssiegel (7) durch Hochfrequenz-Induktionsheizen gebildet wird.

7. Verfahren gemäß Anspruch 5 oder 6, **dadurch gekennzeichnet, dass** wenigstens die thermoplastische innerste Schicht (3) durch die durch das Induktionsheizen erzeugte Wärme geschmolzen oder weich gemacht wird, um mit der weich gemachten oder geschmolzenen gegenüberliegenden innersten Schicht (3) einen Siegelbereich (5, 7) zu bilden.

## Revendications

1. Matériau stratifié en nappe pour récipients d'emballage (46), comprenant :
au moins une couche de support (1),
une couche thermoplastique intérieure (3) et
une couche conductrice (2),
la couche conductrice (2) étant prévue entre la couche de support (1) et la couche thermoplastique intérieure (3),
la couche conductrice (2) étant une couche obtenue par dépôt de vapeur métallique, constituée d'un matériau métallique conducteur prévu sur un film de base (9) d'un film (8) de dépôt de vapeur entre la couche de support (1) et
la couche thermoplastique intérieure (3),
**caractérisé en ce que**
la couche électriquement conductrice (2) est prévue à l'extérieur du film de base (9), entre la couche de support (1) et le film de base (9) et
**en ce que** la couche conductrice (2) est prévue essentiellement sur toute la surface du matériau stratifié.

2. Matériau stratifié selon la revendication 1, **caractérisé en ce que** le film de base (9) est configuré comme couche de barrière.

3. Matériau stratifié selon l'une des revendications précédentes, **caractérisé en ce que** ladite couche thermoplastique intérieure (3) est constituée de polyéthylène à basse densité ou de polyéthylène linéaire à basse densité.

4. Procédé de préparation d'un matériau stratifié pour récipients d'emballage, **caractérisé par** les étapes suivantes :
a) préparation de plusieurs matériaux de couche de support (1) en rouleaux,
b) extraction successive de la couche de support (1) en forme de nappe des matériaux enroulés,
c) fourniture d'un film (8) de dépôt de vapeur qui comprend un film de base (9) et une couche de dépôt de vapeur de métal constituée d'un matériau métallique électriquement conducteur prévu à l'extérieur du film de base (9) entre la couche de support (1) et le film de base (9) et formation d'une couche conductrice (2) à l'intérieur de la couche de support (1) essentiellement sur la totalité de la surface du matériau stratifié,
d) impression d'un motif pour le récipient, indirectement ou directement à l'extérieur de la couche de support (1) en forme de nappe allongée et
e) formation simultanée ou successive de types différents ou d'un même type d'une ou plusieurs couches thermoplastiques à l'extérieur et à l'intérieur de la couche de support (1) en forme de nappe imprimée.

5. Procédé de préparation d'un récipient d'emballage à partir de matériau stratifié selon l'une ou plusieurs des revendications 1 à 3, **caractérisé par** les étapes suivantes :
a) préparation d'un matériau stratifié (4) en forme de nappe, dans lequel ladite couche conductrice (2) est une couche de dépôt de vapeur métallique constituée d'un matériau métallique électriquement conducteur prévu sur un film de base (9) d'un film (8) de dépôt de vapeur, entre la couche de support (1) et la couche thermoplastique intérieure (3),
b) transformation du matériau stratifié en forme de nappe en une forme tubulaire en vue de sceller longitudinalement ce dernier dans le sens de sa longueur,
c) placement d'un aliment fluide dans le tube de matériau stratifié,
d) formation d'une zone (5) de scellement thermique dans la direction transversale du tube rempli, par chauffage par induction à haute fréquence à des intervalles prescrits de manière à sceller ce tube dans la direction transversale et
e) découpe du centre de la région scellée (5) de manière à former des récipients individuels.

6. Procédé selon la revendication 5, **caractérisé en ce qu'**un joint longitudinal (7) est formé par chauffage par induction à haute fréquence.

7. Procédé selon les revendications 5 ou 6, **caractérisé en ce qu'**au moins la couche thermoplastique intérieure (3) est fondue ou amollie par la chaleur produite par le chauffage par induction, de manière à former une zone de scellement (5, 7) avec la couche intérieure complémentaire (3) amollie ou fondue.
